# EUROPEAN PATENT APPLICATION

(11) **EP 2 645 322 A2**
(43) Date of publication of application: **02.10.2013**
(21) Application number: 11843474.5
(22) Date of filing: 24.11.2011
(51) Int. Cl.: G06Q 30/00

(54) **ONLINE ADVERTISING METHOD USING A FREE ADVERTISING WEBSITE**

(30) Priority: 24.11.2010 KR 20100117274
(71) Applicant: Kim, Sung Wan, Seongnam-si, Gyeonggi-do 463-829 (KR)
(72) Inventor: Kim, Sung Wan, Seongnam-si, Gyeonggi-do 463-829 (KR)
(74) Representative: Barth, Stephan Manuel
(86) International application number: PCT/KR2011/009041
(87) International publication number: WO 2012/070899

(57) **Abstract**

Provided is a method of online advertising using a free advertising website, including: a first step of allowing a user to register to the free advertising website using a user terminal in order to provide and receive an advertisement; a second step of allowing the user to check an advertisement posted on a first page of the website after the user accesses the free advertising website, and execute any one of an advertisement posting category and an advertisement search category provided from the free advertising website using the user terminal; a third step of allowing the user to be activated as an advertisement provider when the user selects the advertisement posting category so as to post the advertisement and questionnaire for the advertisement, subtracting from their own points by points corresponding to the posted advertisement and the questionnaire and then storing the subtracted result in a database, and automatically storing the posted advertisement in a personal blog; a fourth step of allowing the user to be activated as an advertisement viewer to search for advertisements when the user selects the advertisement search category, accumulating points when the user replays and views the searched advertisement, and then participates and completes the questionnaire for the advertisement, storing statistical data obtained by the viewed advertisement and the questionnaire in the database, and scrapping data obtained by the viewed advertisement and the questionnaire in the personal blog.

Therefore, from the viewpoint of an advertiser, a free advertisement may be posted on the advertising website, the advertisement may be posted on the front page of the website and continuity of the advertisement may be maintained, the advertiser may be provided with questionnaire statistical data of viewers for his or her advertisement and provided with continuous feedback from interested consumers who have accepted friend requests, from the viewpoint of consumers that have viewed the advertisement, they may accumulate points which can be used toward posting advertisements as necessary, and people have an opportunity to promote themselves as well as to advertise commercially.

## Description

### [Technical Field]

The present invention relate to an online advertising method using a free advertising website, and more particularly, to an online advertising method using a free advertising website such that an advertiser may advertise for free to advertisement viewers using a free advertising website, the advertisement viewers may come in contact with useful advertisements to them by viewing the advertisements and may use points granted for viewing the advertisements or participating in questionnaires for the advertisements toward posting their own advertisements or for other services, and statistical data useful in contemporary industry generated by reproducing and reprocessing the statistical data collected through the questionnaire may be provided.

### [Background Art]

In general, advertising is a type of one-way communication, in which potential consumers are provided with information on products and services and purchasing methods thereof, and the purpose of advertising is to directly generate revenues, that is, a commercial purpose.

Moreover, public relations is propaganda for informing the general public of business purposes of government offices, corporations, groups or individuals so as to get understanding and confidence of the general public, and attract public attention and serves a non-commercial purpose of building image and raising awareness and favor with the public.

In recent global society with various types of media, since vast quantities of information and competitors are being generated, activities to raise public awareness of individual purposes or introduce oneself are becoming very competitive. In reality, even though promotion having a relatively lower cost than that of the advertising, a promotion effect on people is generated when costly advertising was performed.

However, such advertisements have many problems in that, from the viewpoint of advertisers, online or offline media having a high advertising effect require high advertising cost and it is difficult to know the effectiveness of the advertising, and consumer awareness of the advertisement disappears once an advertising contract is terminated.

Further, from the viewpoint of consumers viewing the advertisement, the consumers can become annoyed with advertisements unnecessary or irrelevant to them and develop skeptical attitudes towards overdone advertisement.

In addition, there is a problem in that the advertising to which large cost or amount of research has been devoted by corporations and individuals is valuable only for temporary advertising means and not for any other purposes.

### [Disclosure]

### [Technical Problem]

Accordingly, example embodiments of the present invention provide an online advertising method using a free advertising website, wherein: anyone can post an advertisement on the free advertising websites for free; the advertisement is regarded to be posted on the front page of the website at the time zone or at the area set by an advertiser so that faith and expectations in the effects of the advertising are increased; a statistical database realizing the advertisement and questionnaire statistical data on the browsed advertisement as a database are provided as necessary; consumers viewing the advertisement may select and view advertisements useful to them; information is obtained through statistical data on the advertisement and corresponding questionnaire; and response and trends of the advertisement, related industries and consumers who have viewed the advertisement may be identified.

### [Technical Solution]

Example embodiments of the present invention includes: a first step of allowing a user to register to the free advertising website using a user terminal in order to provide or receive an advertisement; a second step of allowing the user to check an advertisement posted on a first page of the website after the user accesses the free advertising website, and execute any one of an advertisement posting category and an advertisement search category provided from the free advertising website using the user terminal; a third step of allowing the user to be activated as an advertisement provider when the user selects the advertisement posting category so as to post the advertisement and questionnaire for the advertisement, subtracting from their own points by points corresponding to the posted advertisement and the questionnaire and then storing the subtracted result in a database, and automatically storing the posted advertisement in a personal blog of the advertisement provider; and a fourth step of allowing the user to be activated as an advertisement viewer to search for advertisements when the user selects the advertisement search category, accumulating points when the user replays and views the searched advertisement, and then participates and completes the questionnaire for the advertisement, storing statistical data obtained by the viewed advertisement and the questionnaire in the database, and scrapping data obtained by the viewed advertisement and the questionnaire in the personal blog of the advertisement viewer.

### [Advantageous Effects]

Example embodiments of the present invention have advantages in that from the viewpoint of an advertiser, a free advertisement may be posted on the advertising website, the advertisement may be posted on the front page of the website and continuity of the advertisement may be maintained, the advertiser may be provided with questionnaire statistical data of viewers for his or her advertisement and provided with continuous feedback from interested consumers who have accepted friend requests, from the viewpoint of consumers that have viewed the advertisement, they may accumulate points which can be used toward posting advertisements as necessary, and people have an opportunity to promote themselves as well as to advertise commercially.

Moreover, the questionnaires about the advertisement are managed as statistical data, and a variety of statistical data reproduced and reprocessed by the variety of statistical methods is provided as necessary. Based on such data, information on the advertisement and corresponding industries may be obtained and trends thereof may be predicted.

### [Description of Drawings]

FIG. 1 is a schematic diagram illustrating a configuration of an online advertising using a free advertising website according to an example embodiment of the invention.
FIG. 2 is a diagram illustrating a detailed configuration of the free advertising website according to the example embodiment of the invention.
FIG. 3 is a flowchart illustrating the online advertising method using the free advertising website according to the example embodiment of the invention.
FIGS. 4 and 5 are exemplary embodiments of an advertisement screen posted a front page on the website according to the example embodiment of the invention.

### [Modes of the Invention]

Hereinafter, components of example embodiments will be described with reference to the accompanying drawings.

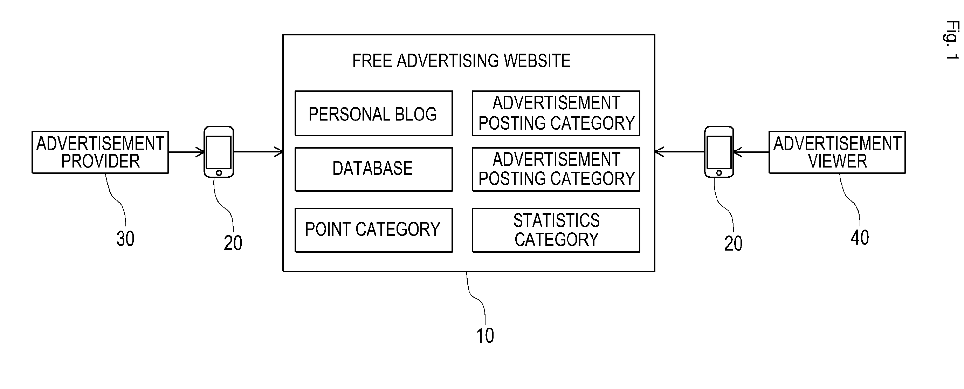

FIG. 1 is a schematic diagram illustrating a configuration of an online advertising using a free advertising website according to an example embodiment of the invention, in which the configuration includes a free advertising website 10 for posting a free advertisement, a user terminal 20 capable of accessing to the free advertising website 10, an advertisement provider 30 who accesses the free advertising website 10 using the user terminal 20 and posts the advertisement, and an advertisement viewer 40 who accesses the free advertising website 10 using the user terminal 20 and views the advertisement.

Examples of the user terminal 20 accessible to the free advertising website 10 may include all terminals accessible to the Internet such as a general computer, a laptop, and a wired/wireless personal handheld terminal.

The configuration of the free advertising website 10 includes a personal blog, an advertisement posting category, a database, an advertisement search category, a point category, and a statistics category.

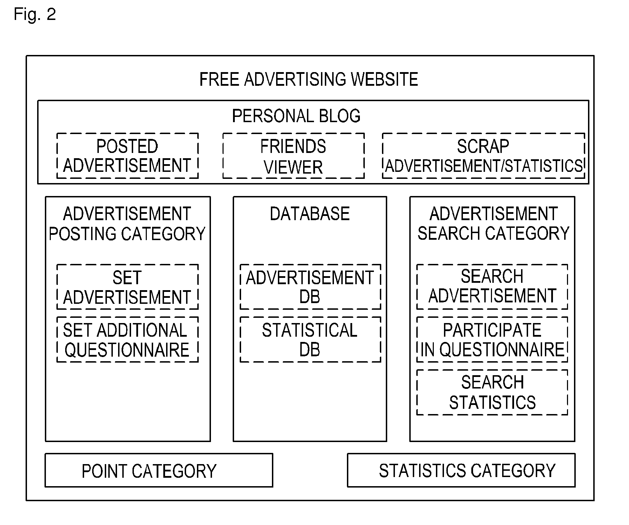

FIG. 2 is a diagram illustrating a detailed configuration of the free advertising website 10, in which an advertisement is posted on the front page of all members accessing the free advertising website 10, and when the user views or skips this advertisement, the connection is made to a main website displaying the personal blog, the advertisement posting category, the database, the advertisement search category, the point category, and the statistics category.

The term 'all members' described above refers to the advertisement provider 30 who posts the advertisement and the advertisement viewer 40 who views the advertisement. It means that the member who posts or views the advertisement may be an advertisement provider 30 and may also be an advertisement viewer 40.

The personal blog includes: a personal advertisement posting category in which entire advertisement lists that the advertisement have posted in the advertisement posting category as the advertisement providers 30 are stored; a personal advertisement storing category in which advertisement lists collected by manually scrapping the advertisement viewed by the viewers serving as the advertisement viewers 40 and advertisement lists collected by scrapping interested industries and keywords through an automatic scrap setting are stored; a personal friend management category in which friend lists with respect to members in which his or her own is interested as the advertisement providers, friend lists of members in which his or her own is interested as the advertisement viewers 40, and friend lists with respect to members who have common interest keywords are stored; and a statistical data storing category in which questionnaire statistical data lists of advertisements posted as the advertisement providers 30, statistical data lists obtained by participating in the questionnaire of advertisements viewed as the advertisement viewer 40, statistical data lists collected by scrapping interested industries and keywords through an automatic scrap setting, and statistical data lists collected by manually scrapping through searching the statistical data are stored.

In the friend lists stored in the personal blog, when the advertisement provider 30 posts the advertisement, it may be set so that the corresponding advertisement is automatically scrapped and stored or is received using a private message, e-mail, or a cell phone text message in the personal advertisement storing category of the personal blog, even without separately searching the advertisement of the advertisement provider 30 by the advertisement viewer 40 who is in the friend lists of the advertisement provider 30.

Furthermore, since keywords about specific advertisements and statistical data may be set in the personal blog, it may be set so that the advertisements and statistical data including such keywords may be automatically stored in the personal advertisement storing category and the personal statistical data storing category of the personal blog. Using an advertisement as an example, when the advertisement viewer 40 sets a vehicle as an advertising scrap keyword, since advertisements on vehicles are received and stored in the advertisement storing category of his or her personal blog, the advertisement viewer 40 may view a desired advertisement by merely accessing the personal blog in the free advertising website 10 even without separately searching the advertisements. Similarly, the set keyword advertisement notification may be received using a private message, e-mail, or a cell phone text message. In addition, the set keyword statistical data notification of the statistical data may also be received using a private message, e-mail, or a cell phone text message.

The advertisement posting category includes an advertisement setting category in which an advertising area, a time zone, and keywords are set so that the advertisement provider 30 accesses the free advertising website 10 to post the advertisement and a questionnaire setting category which is configured to perform additional questionnaires on the advertisement viewer 40 who viewed the advertisement, and the questionnaires may include descriptive open-ended and multiple-choice questions. The advertisement provider 30 respectively sets points rewarded corresponding to viewing of the advertisement and answering of the questionnaire, and provides the points rewarded to the advertisement viewer 40.

The advertisement posting of the advertisement provider 30 may be performed such that the advertisement is directly registered in the advertisement posting category or the advertisement of the corresponding advertisement provider 30 registered in websites other than the free advertising website 10 according to the example embodiment of the invention and the advertisement posted in the website managed by the corresponding advertisement provider 30 may be received in a scrap or link manner so as to be registered in the advertisement posting category of the free advertising website 10.

In the point category, the advertisement provider 30 may check a point subtraction status according to the advertisement viewing and the questionnaire answering of the advertisement viewer 40 in the advertisement posting category and his or her own point history, whereas the advertisement viewer 40 may check a point accumulation status according to the advertisement viewing and questionnaire answering and his or her own point history. A history of friend accept point accumulation when the user accepts a friend request with respect to the advertisement provider 30 may also be checked.

The database includes an advertisement database in which all advertisements posted in the free advertising website 10 are stored, a statistical database in which statistical data based on advertisement industries, products, and types of advertisement viewers 40 (detail types such as sex, age, occupation, and residence) according to the questionnaire answering are stored, and a point database for managing the points of members.

The advertisement search category includes a category in which the advertisements are searched based on an access area, a time zone, and keywords when accessed by the advertisement viewer 40, a category for accumulating points corresponding to the questionnaire participation about the viewed advertisement and acceptance of friend requests, and a statistics search category for retrieving and reading data from the statistical database.

The statistics category is classified into statistical data on participation in the questionnaire in the advertisement search category, that is, statistical data gathered from questionnaires that the advertisement viewer 40 has completed according to the questionnaire format set by the advertisement provider 30, and statistical data through which statistical data of other questionnaires associated with the corresponding questionnaire is gathered in the free advertising website 10 itself and reproduced and reprocessed through a variety of statistical methods including analyzing.

The advertisement provider 30 includes a corporation that offers a brand name, product, and service of the corporation, a shop (sole proprietor) that promotes his or her shop or offers service or product of the shop, and any person or organization who wishes to advertise or promote individuals such as a personal anniversary, good or bad news, a special ability, interested news, a public campaign, a personal promotion (a job opening, a job search, a marriage, dating, etc.).

The advertisement viewer 40 also includes all corporations, shops (sole proprietors), and individuals who wish to view promotions and advertisements.

One screen of the screens on the free advertising website 10 provides to view real-time news, breaking news, or various life information on all members accessing the website.

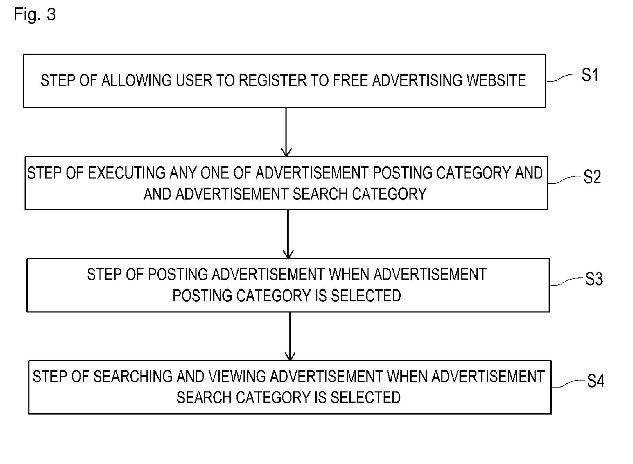

FIG. 3 is a flowchart illustrating an online advertising method using the free advertising website according to the example embodiment of the invention, which includes the following steps: a first step (S1) of allowing the user to register to the free advertising website 10 using the user terminal 20 in order to provide or receive an advertisement; a second step (S2) of allowing the user to check an advertisement posted on a first page of the website after the user accesses the free advertising website 10 and execute any one of an advertisement posting category and an advertisement search category provided from the free advertising website 10 using the user terminal 20; a third step (S3) of allowing the user to be activated as an advertisement provider 30 when the user selects the advertisement posting category so as to post the advertisement and questionnaire for the advertisement, subtracting from their own points by points corresponding to the posted advertisement and the questionnaire and then storing the subtracted result in a database, and automatically storing the posted advertisement in a personal blog; and a fourth step (S4) of allowing the user to be activated as an advertisement viewer 40 to search for advertisements when the user selects the advertisement search category, accumulating points when the user replays and views the searched advertisement, and then participates and completes the questionnaire for the advertisement, storing statistical data obtained by the viewed advertisement and the questionnaire in the database, and scrapping data obtained by the viewed advertisement and the questionnaire in the personal blog.

The advertisement posted on the first page of the website in the second step (S2) is exclusively advertised on an entire screen, or is advertised on three screens split into a center screen, a right and a left screens of the entire screen, the exclusive advertisement is offered to all members accessed to the free advertising website 10 as a full-screen advertisement, the split advertisements include a center screen to which the advertisement is offered to members of all areas, one screen of the screens to which the advertisement of the area where the advertisement viewer 40 accessed is offered, and the other screen of the screens to which the advertisement of a sub-area of the area of the one screen of the screens is offered.

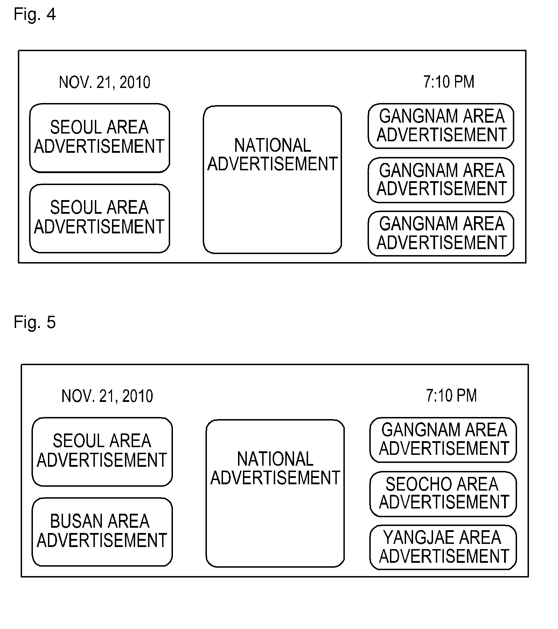

The advertisements split into three screens basically show the advertisement content based on the area that the advertisement viewer 40 has accessed. FIG. 4 illustrates an exemplary embodiment of the split advertisements, and when the advertisement viewer 40 accesses the free advertising website 10 using the user terminal 20 in Gangnam area at present, a center screen of the screens shows national advertising serving as a main category, a left screen of the screens shows Seoul-area advertising serving as a sub category, and a right screen of the screens shows advertising for Gangnam area, that the advertisement viewer 40 has accessed, which is an advertisement of a detail area in Seoul area, serving as a sub-sub-category.

For example, when the user accesses the free advertising website 10 at a certain time from Suwon, Gyeonggi Province, the main category advertisement (center screen of the screens) shows the national advertising, the sub-category advertisement (one screen of the screens) shows Gyeonggi Province advertising, and the sub-sub-category advertisement (the other screen of the screens) shows Suwon area advertising. At the same time, when the user accesses the free advertising website 10 from Masan, South Gyeongsang Province, the main category advertisement (center screen of the screens) shows the national advertising, the sub-category advertisement (one screen of the screens) shows South Gyeongsang Province advertising, and the sub-sub category advertisement (another screen of the screens) shows Masan area advertising.

As illustrated in FIG. 5, in another embodiment of the split advertisement, the screen may be set such that a center screen of the screens shows the national advertising serving as a main category, a left screen of the screens shows Seoul and Busan area advertising serving as sub-categories, and a right screen of the screens shows advertising of Gangnam, Seocho, and Yangjae, the areas to which the user belongs, serving as sub-sub-categories. Moreover, advertising of other areas may be provided through local search.

The main category, sub-category, and sub-sub-category advertising may be variously implemented depending on the setting region, for example, by country, by city, and by area. In FIGS. 4 and 5, advertisements split three advertisement screens were described as an example, but two or more screens may be set according to setting of the service providers or members.

The third step (S3) includes a step 3-1 (S3-1) of allowing the user to set an advertising area, a time zone, and keywords in the advertisement posting category using the user terminal 20; a step 3-2 (S3-2) of setting an additional questionnaire to receive an input of the questionnaire for the advertisement from the advertisement viewer 40 after the user views the set advertisement, and setting points rewarded corresponding to the questionnaire and points rewarded for allowance to be joined in a friend of the advertisement viewer 40; a step 3-3 (S3-3) of storing information on the posted advertisement in the personal blog when checking the point subtraction subtracted by the points corresponding to the advertisement posting and the additional questionnaire in a point category and then storing the subtracted result in the database; and a step 3-4 (S3-4) of notifying members who wish to receive the advertisement when the advertisement provider 30 posts the advertisement in the personal blog among the advertisement viewers 40 registered as a friend of the advertisement provider 30 or members who wish to receive the advertisement when the advertisement including a keyword is posted in the personal blog among members who set the advertisement and questionnaire content as the keyword using a private message, e-mail, or a cell phone text message and automatically scrapping the advertisement content when the advertisement is posted.

In an advertising posting area and time, the advertisement provider 30 may purchase a desired area and a posting time in units of 10 minutes (predetermined time) with the points or cash. Thus, the advertisement purchased as above allows all members to view who accesses the free advertising website 10 at a corresponding time and in a corresponding area.

For example, when the member may post the advertisement relevant to the area to which he or she belongs at a certain day and time in order to promote personal advertising (for example, of a marriage, birthday, or celebration) and then notify acquaintances of the advertisement, in addition to advertising for sales and providing a product and a service, the acquaintances may view the promotion advertising set by the member.

The fourth step (S4) includes a step 4-1 (S4-1) of allowing the user to search for the advertisements according to a region, a time zone, and keywords in the advertisement search category using the user terminal 20; a step 4-2 (S4-2) of accumulating the points corresponding to the questionnaire participation after viewing the searched advertisement and allowance to be joined in a friend of the advertisement provider 30; a step 4-3 (S4-3) of checking the point accumulation corresponding to the advertisement viewing, the questionnaire participation, and allowance to be joined in friend lists in the point category; a step 4-4 (S4-4) of gathering the result of questionnaire participation in the statistics category and then storing the result in the database; and a step 4-5 (S4-5) of storing history on the searched advertisement and information on allowance to be joined in friend lists of the advertisement provider 30 in the personal blog.

In the main advertisement, which is viewed at the time of accessing the free advertising website 10, the advertising area, date, and time are selected on a first-come-first served basis among the advertisement providers 30 who posts the advertisement, or a reference point is set and priority is given to the advertisement provider 30 who requests to pay the maximum point by an auction.

The statistical data on the questionnaire completed by the advertisement viewer 40 is provided to the advertisement provider 30 who posts the advertisement and the members who set the automatically scrapping among the members participated to the questionnaire for the advertisement, simple statistical data on the total questionnaire stored in the database of the free advertising website 10 and a statistical data obtained by analyzing the plurality of simple statistical data with a plurality of statistical methods, and reproducing and reprocessing data according to industry, product, class of person completing the questionnaire, time period, or area is provided for free or at a charge to all members and advertisers using online media, and the members who wish to receive the statistical data are notified that the statistical data has been posted using a private message, e-mail, or a cell phone text message.

The statistical data may be provided for free or at a charge depending on the type or the importance of the statistical data. The free statistical data is simple statistical data obtained through the questionnaire from the advertisement provider 30. The statistical data obtained from a plurality of advertisement providers 30, gathered in the database of the free advertising website 10 and reproduced and reprocessed with a variety of statistical methods including analyzing may be optionally provided for free or at a charge.

The methods of receiving the above-described statistical data include a browsing method in which the data is retrieved and read from the statistical database storing the statistical data and a method in which the browsed data is scrapped, which are allowed to all members (corporations and individuals).

Another method of receiving the above-described statistical data is a method in which the data is automatically stored in the personal blog. The advertisement provider 30 who posted the advertisement, the members who wish to receive the data among the questionnaire participants of the corresponding advertisement, and the members who set the receiving of the statistical result of the corresponding keywords or advertisers (corporations and individuals listed as friends) among members who did not participate in the questionnaire may receive the above-described statistical data in the his or her personal blogs.

When the his or her own points are insufficient to pay for the advertisement viewing, answering the questionnaire, or acceptance of friend requests of the advertisement viewer 40, the advertisement provider 30 that wants to post the advertisement in the free advertising website 10 according to the embodiment of the invention directly purchases points with cash in the site and uses the points.

The corporation, the personal advertisement provider 30, or the advertisement viewer 40 members who are listed and stored as friends in the personal blog of the free advertising website 10 can communicate with each other using a private message, e-mail, and a text message.

Accordingly, in example embodiments of the present invention, anyone can post an advertisement on the free advertising websites for free, the advertisement is regarded to be posted on the front page of the website at the time zone or at the area set by an advertiser so that faith and expectations in the effects of the advertising are increased, a statistical database realizing the advertisement and questionnaire statistical data on the browsed advertisement as a database are provided as necessary, consumers viewing the advertisement may select and view advertisements useful to them, information is obtained and trends of the advertisement may be identified through statistical data obtained by a questionnaire of the advertisement and statistical data obtained by reproducing and reprocessing the statistical data.

While the present invention has been illustrated and described with reference to specific exemplary embodiments of the present invention, it will be understood by those skilled in the art that various alternations and modifications may be made therein without departing from the sprit and scope disclosed in the appended claims.

### [Industrial Applicability]

The present invention have advantages in that from the viewpoint of an advertiser, a free advertisement may be posted on the advertising website, the advertisement may be posted on the front page of the website and continuity of the advertisement may be maintained, the advertiser may be provided with questionnaire statistical data of viewers for his or her advertisement and provided with continuous feedback from interested consumers who have accepted friend requests, from the viewpoint of consumers that have viewed the advertisement, they may accumulate points which can be used toward posting advertisements as necessary, and people have an opportunity to promote themselves as well as to advertise commercially.

Moreover, the questionnaires about the advertisement are managed as statistical data, a variety of statistical data reproduced and reprocessed by the variety of statistical methods is provided as necessary. Based on such data, information on the advertisement and corresponding industries may be obtained and trends thereof may be predicted.

## Claims

1. An online advertising method using a free advertising website, comprising:
a first step (S1) of allowing a user to register to the free advertising website (10) using a user terminal (20) in order to provide or receive an advertisement;
a second step (S2) of allowing the user to check an advertisement posted on a first page of the website after the user accesses the free advertising website (10), and execute any one of an advertisement posting category and an advertisement search category provided from the free advertising website (10) using the user terminal (20);
a third step (S3) of allowing the user to be activated as an advertisement provider (30) when the user selects the advertisement posting category so as to post the advertisement and questionnaire for the advertisement, subtracting from their own points by points corresponding to the posted advertisement and the questionnaire and then storing the subtracted result in a database, and automatically storing the posted advertisement in a personal blog; and
a fourth step (S4) of allowing the user to be activated as an advertisement viewer (40) to search for advertisements when the user selects the advertisement search category, accumulating points when the user replays and views the searched advertisement, and then participates and completes the questionnaire for the advertisement, storing statistical data obtained by the viewed advertisement and the questionnaire in the database, and scrapping data obtained by the viewed advertisement and the questionnaire in the personal blog.

2. The method of claim 1, wherein the advertisement posted on the first page of the website in the second step (S2) is exclusively advertised on an entire screen, or is advertised on three screens split into a center screen, a right and a left screens of the entire screen, the exclusive advertisement is offered to all members accessed to the free advertising website (10) as a full-screen advertisement, the split advertisements include a center screen to which the advertisement is offered to members of all areas, one screen of the screens to which the advertisement of the area where the advertisement viewer (40) accessed is offered, and the other screen of the screens to which the advertisement of a sub-area of the area of the one screen of the screens is offered.

3. The method of claim 1, wherein the third step (S3) includes a step 3-1 (S3-1) of allowing the user to set an advertising area, a time zone, and keywords in the advertisement posting category using the user terminal (20); a step 3-2 (S3-2) of setting an additional questionnaire to receive an input of the questionnaire for the advertisement from the advertisement viewer (40) after the user views the set advertisement, and setting points rewarded corresponding to the questionnaire and points rewarded for allowance to be joined in a friend of the advertisement viewer (40); a step 3-3 (S3-3) of storing information on the posted advertisement in the personal blog when checking the point subtraction subtracted by the points corresponding to the advertisement posting and the additional questionnaire in a point category and then storing the subtracted result in the database; and a step 3-4 (S3-4) of notifying members who wish to receive the advertisement when the advertisement provider (30) posts the advertisement in the personal blog among the advertisement viewers (40) registered as a friend of the advertisement provider (30) or members who wish to receive the advertisement when the advertisement including a keyword is posted in the personal blog among members who set the advertisement and questionnaire content as the keyword using a private message, e-mail, or a cell phone text message and automatically scrapping the advertisement content when the advertisement is posted.

4. The method of claim 1, wherein the fourth step (S4) includes a step 4-1 (S4-1) of allowing the user to search for the advertisements according to a region, a time zone, and keywords in the advertisement search category using the user terminal (20); a step 4-2 (S4-2) of accumulating the points corresponding to the questionnaire participation after viewing the searched advertisement and allowance to be joined in a friend of the advertisement provider (30); a step 4-3 (S4-3) of checking the point accumulation corresponding to the advertisement viewing, the questionnaire participation, and allowance to be joined in friend lists in the point category; a step 4-4 (S4-4) of gathering the result of questionnaire participation in the statistics category and then storing the result in the database; and a step 4-5 (S4-5) of storing history on the searched advertisement and information on allowance to be joined in friend lists of the advertisement provider (30) in the personal blog.

5. The method of claim 1, wherein in the main advertisement, which is viewed at the time of accessing the free advertising website (10), the advertising area, date, and time are selected on a first-come-first served basis among the advertisement providers (30) who posts the advertisement, or a reference point is set and priority is given to the advertisement provider (30) who requests to pay the maximum point by an auction.

6. The method of claim 4, wherein the statistical data on the questionnaire completed by the advertisement viewer (40) is provided to the advertisement provider (30) who posts the advertisement and the members who set the automatically scrapping among the members participated to the questionnaire for the advertisement, simple statistical data on the total questionnaire stored in the database of the free advertising website (10) and a statistical data obtained by analyzing the plurality of simple statistical data with a plurality of statistical methods, and reproducing and reprocessing data according to industry, product, class of person completing the questionnaire, time period, or area is provided for free or at a charge to all members and advertisers using online media, and the members who wish to receive the statistical data are notified that the statistical data has been posted using a private message, e-mail, or a cell phone text message.
